# EUROPÄISCHE PATENTSCHRIFT

(11) **EP 3 374 365 B1**
(45) Veröffentlichungstag und Bekanntmachung des Hinweises auf die Patenterteilung: **10.04.2019**
(21) Anmeldenummer: 16794657.3
(22) Anmeldetag: 14.11.2016
(51) Int. Cl.: C07F 7/14

(54) **VERFAHREN ZUR HERSTELLUNG VON 4-(DIALKYLCHLOROSILYL)-BUTYRONITRIL**
METHOD FOR PRODUCING 4-(DIALKYLCHLOROSILYL)-BUTYRONITRILE
PROCÉDÉ DE PRÉPARATION DE 4-(DIALKYLCHLOROSILYL)-BUTYRONITRILE

(43) Veröffentlichungstag der Anmeldung: 19.09.2018
(73) Patentinhaber: Wacker Chemie AG, 81737 München (DE)
(72) Erfinder: JANTKE, Dominik, 85386 Eching (DE); STOHRER, Jürgen, 82049 Pullach (DE)
(74) Vertreter: Fritz, Helmut
(86) Internationale Anmeldenummer: PCT/EP2016/077591
(87) Internationale Veröffentlichungsnummer: WO 2018/086715

(56) Entgegenhaltungen:
- Tianqiao Yong ET AL: "Supporting Information Organosilicon compounds containing nitrile and oligo(ethylene oxide) substituents as safe electrolytes for high-voltage lithium-ion batteries", Journal of Power Sources, 1. Januar 2014 (2014-01-01), Seiten 1-9, XP055367578, Gefunden im Internet: URL:www [gefunden am 2017-04-26] -& YONG TIANQIAO ET AL: "Organosilicon compounds containing nitrile and oligo(ethylene oxide) substituents as safe electrolytes for high-voltage lithium-ion batteries", JOURNAL OF POWER SOURCES, ELSEVIER SA, CH, Bd. 254, 31. Dezember 2013 (2013-12-31), Seiten 29-32, XP028610442, ISSN: 0378-7753, DOI: 10.1016/J.JPOWSOUR.2013.12.087

## Beschreibung

Die Erfindung betrifft ein Verfahren zur Herstellung von 4-(Dialkylchlorosilyl)-butyronitrilen durch Umsetzung von Allylcyanid mit Dialkylchlorsilanen.

4-(Dialkylchlorosilyl)-butyronitrile werden beispielsweise zur gezielten Funktionalisierung von Oberflächen eingesetzt, wie etwa in Wang et al. "Electrostatic-Gated Transport in Chemically Modified Glass Nanopore Electrodes" (J. Am. Chem. Soc. 2006, 128, 7679-7686) beschrieben. 4-(Dialkylchlorosilyl)-butyronitrile können aber auch in einem weiteren Reaktionsschritt zu den entsprechenden 4-(Dialkylfluorosilyl)-butyronitril umgesetzt werden. Diese sind nach der US 2014/0356735A1vielversprechende Bestandteile für Elektrolyte für Lithium-Ionen-Batterien, die z.B. im Gemisch mit dem häufig eingesetzten Leitsalz LiPF₆ eine hohe thermische Stabilität aufweisen.

Die Herstellung von 4-(Dialkylchlorosilyl)-butyronitrilen oder analogen Verbindungen durch Hydrosilylierung ist bekannt.

In der US 2014/0356735 A1 wird die Synthese von 4-(Dimethylchlorosilyl)-butyronitril mittels Hydrosilylierung von Allylcyanid mit Dimethylchlorsilan unter Platin-Katalyse (Karstedt-Katalysator) beschrieben. Hierzu wird Allylcyanid zusammen mit dem Katalysator vorgelegt und bei erhöhter Temperatur Dimethylchlorsilan langsam zudosiert.

Bei der Durchführung der Hydrosilylierung gemäß dieses Stands der Technik unter Einsatz von technischem Allylcyanid wird beobachtet, dass es bei der Zudosierung des Silans zu einer Farbänderung der Reaktionsmasse nach dunkelgelb bis braun kommt und nur ein unvollständiger Umsatz erreicht wird. Die Reaktion verläuft bei Einsatz des technischen Allylcyanids schlechter als in US 2014/0356735 A1beschrieben.

Dies ist aus Sicherheitsgründen problematisch, weil die unvollständige Reaktion eine potentielle Akkumulation von Reaktionswärme zur Folge hat. Neben diesem Sicherheitsproblem und der aus der Unvollständigkeit der Umsetzung resultierenden schlechten Wirtschaftlichkeit des Verfahrens bereitet dies auch bei der Aufarbeitung zusätzlichen Aufwand, weil nicht reagierte Edukte aus dem Reaktionsgemisch abgetrennt werden müssen.

Die EP 2221310 B1 beschreibt die Hydrosilylierung von einem Überschuss Allylcyanid mit Methyldichlorsilan im Autoklav in Anwesenheit einer Carboxylsäure. Auch hier erhält man trotz des Einsatzes eines Promoters keine quantitative Ausbeute. Bei der Aufarbeitung muss zusätzlich die Säure abgetrennt werden.

Takiguchi et al., "Preparation of 1,3-Bis(4-aminobutyl)-1,3-dimethyl-1,3-diphenylsiloxane and Siloxane containing Polyamides", Bulletin of the Chemical Society of Japan, Vol. 52 (6), 1871-1872 (1979) beschreibt die Hydrosilylierung von hochreinem Allylcyanid mit Dimethylchlorsilan unter Platin-Katalyse in einer geschlossenen Stahlbombe bei 120°C ohne Kontrolle des Druckes, wobei die Ausbeute nicht näher beschrieben ist. Für ein analoges Produkt, 3-Cyanopropylchloromethylphenylsilan wird eine Ausbeute von 88% nach einer Reaktionsdauer von 24 h und fraktionierender Destillation angegeben. Großtechnisch ist der Einsatz von hochreinem Allylcyanid aber nicht wirtschaftlich, da die Entfernung des isomeren und ähnlich siedenden Crotonitrils (Crotonsäurenitril) mit großem Aufwand verbunden ist.

Die Durchführung beinhaltend Vorlage aller Komponenten in einem geschlossenen System ohne Kontrolle des sich aufbauenden Druckes und des Temperaturverlaufs ist ebenfalls auf die Durchführung im Labormaßstab beschränkt, eine Skalierung in einen industriellen Maßstab ist schwierig möglich. Daher ist diese Vorgehensweise für industrielle Anwendbarkeit nicht relevant.

Tianqiao Yong et al., "Organosilicon compounds containing nitrile and oligo(ethylene oxide) substituents as safe electrolytes for high-voltage lithium-ion batteries", Journal of Power Sources 2013 (254) 29-32 und Appendix A. Supplementary Information, offenbart die Reaktion von 100 mmol Allylcyanid mit 100 ml Dimethylchlorsilan in Gegenwart des Karstedt-Katalysators, wobei das Dimethylchlorsilan zur Mischung von Allylcyanid und Katalysator getropft wird und das Produkt in 95%-iger Ausbeute erhalten wird. Die Reaktanden werden ausdrücklich im stöchiometrischen Verhältnis von 1:1 eingesetzt und in der angegebenen Reihenfolge umgesetzt.

Aus dem bekannten Stand der Technik resultiert damit, dass die bekannten Methoden zur Herstellung von 4-(Dialkylchlorosilyl)-butyronitrilen großtechnisch aufgrund einer Deaktivierung des Katalysatorsystems, insbesondere bei Verwendung von nicht speziell gereinigtem Allylcyanid, und daraus resultierendem unvollständigem Umsatz, aber auch der nicht vorhandenen Reaktionskontrolle bei Durchführung in geschlossenen Systemen nur schwer realisierbar sind.

Aufgrund des hohen Dampfdrucks von Dialkylchlorsilanen wird üblicherweise mit Dosierung dieser Komponenten gearbeitet. Eine Vorlage des Allylcyanids und des Katalysators ist daher dem Stand der Technik zufolge die bevorzugte Vorgehensweise.

Es bestand ein Bedarf an einem Verfahren, welches technisch realisierbar ist, in dem der Einsatz von technischem, nämlich insbesondere Crotonitril enthaltendem Allylcyanid zu möglichst vollständigen Umsätzen führt und welches eine kontrollierbare Reaktionsführung erlaubt.

Gegenstand der Erfindung ist ein Verfahren zur Herstellung von 4-(Dialkylchlorosilyl)-butyronitrilen durch Umsetzung einer Mischung aus Allylcyanid T, welches technische Reinheit aufweist und eine Mischung aus 100 Gewichtsteilen Allylcyanid und 0,01 bis 5 Gewichtsteilen Crotonitril ist, mit Dialkylchlorsilanen in Gegenwart eines Katalysators der 8. Nebengruppe des Periodensystems der Elemente, wobei die Umsetzung so geführt wird, dass in Anwesenheit des Katalysators im Reaktionsgemisch ein stöchiometrischer Überschuss des eingesetzten Dialkylchlorsilans vorliegt und das Allylcyanid T zudosiert wird und wobei die Alkylreste im Dialkylsilan und 3-Cyanopropyldialkylsilan lineare Alkylreste mit 1 bis 6 Kohlenstoffatomen sind.

Im Rahmen dieser Erfindung wird unter Allylcyanid T, welches technische Reinheit aufweist, ein technisches Allylcyanid verstanden, welches eine Mischung aus 100 Gewichtsteilen Allylcyanid und 0,01 bis 5 Gewichtsteilen, vorzugsweise 0,02 bis 3,0 Gewichtsteilen, insbesondere 0,05 bis 1,5 Gewichtsteilen Crotonitril. Es können herstellungsbedingt auch noch weitere Verunreinigungen mit weniger als 2 Gewichtsteilen, bevorzugt weniger als 1 Gewichtsteil, insbesondere weniger als 0,1 Gewichtsteile, vorhanden sein.

Weitere Komponenten sind beispielsweise Blausäure, Allylalkohol, Allylchlorid und Wasser.

Crotonitril wird als Summe der Isomere cis-Crotonitril und trans-Crotonitril verstanden.

Die Mischung enthält vorzugsweise höchstens 0,1 Gewichtsteile HCN, besonders bevorzugt höchstens 0,01 Gewichtsteile HCN.

Überraschenderweise wurde gefunden, dass ein vollständiger Umsatz des Allylcyanids T erhalten wird, wenn in Anwesenheit des Katalysators ein Überschuss des eingesetzten Dialkylchlorsilans gegenüber dem Allylcyanid vorliegt und das Allylcyanid T während der Reaktion zudosiert wird.

Dadurch wird die Deaktivierung des Katalysators vermieden und ein vollständiger Umsatz erhalten sowie eine permanente Reaktionskontrolle sichergestellt.

Weil der Umsatz vollständig ist, wird die Sicherheit des Verfahrens dadurch erhöht, dass eine Akkumulation von nicht umgesetzten Ausgangsstoffen verhindert wird.

Als Produkte werden 4-(Dialkylchlorosilyl)-butyronitrile erhalten. Ebenso werden geringe Mengen an den isomeren Produkten, nämlich 3-(Dialkylchlorosilyl)-butyronitrile, erhalten. Bevorzugt werden weniger als 10 %, besonders bevorzugt weniger als 5 % und besonders bevorzugt weniger als 3 % 3-(Dialkylchlorosilyl)-butyronitrile bezogen auf die Summe der Reaktionsprodukte 4-(Dialkylchlorosilyl)-butyronitrile und 3-(Dialkylchlorosilyl)-butyronitrile erhalten.

Bei einem diskontinuierlichen Verfahren wird bevorzugt das Dialkylchlorsilan, gegebenenfalls enthaltend den Katalysator, vorgelegt. Es kann auch das Dialkylchlorsilan vorgelegt werden und eine sequentielle Dosierung des Katalysators und des Allylcyanids T erfolgen. Es erfolgt die Dosierung des Allylcyanids T zur Reaktionsmasse. Dies hat zur Folge, dass die Konzentration an freiem Allylcyanid in der Reaktionslösung zu jedem Zeitpunkt möglichst minimal ist. Es wird ein stöchiometrischer Überschuss an Dialkylchlorsilan, bezogen auf die Gesamtmenge des umzusetzenden Allylcyanids, eingesetzt. Die auftretende Wärmetönung der Reaktion kann durch die Dosierung des Allylcyanids T gesteuert werden.

Bei einem kontinuierlichen Verfahren wird bevorzugt so verfahren, dass alle Komponenten parallel dosiert werden, wobei das Dialkylchlorsilan stets im Überschuss vorliegt. Es kann auch eine Mischung des Dialkylchlorsilans und des Katalysators dosiert werden. Die Dosierung wird so gesteuert, dass in Anwesenheit des Katalysators stets ein Überschuss des Dialkylchlorsilans vorliegt. Die auftretende Wärmetönung der Reaktion kann durch Kontrolle der Dosierung der Komponenten, insbesondere des Allylcyanids T, gesteuert werden.

Die Alkylreste im Dialkylchlorsilan und 4-(Dialkylchlorosilyl)-butyronitril sind lineare Alkylreste mit 1 bis 6 Kohlenstoffatomen. Insbesondere bevorzugt ist der Methyl-, Ethyl-, n-Propyl-. Ganz besonders bevorzugt ist der Alkylrest ein Methylrest. Insbesondere wird Dimethylchlorsilan eingesetzt.

Es kann im Verfahren ein Katalysator der 8. Nebengruppe des Periodensystems der Elemente oder ein Gemisch mehrerer Katalysatoren eingesetzt werden. Es können die Elemente oder Verbindungen eingesetzt werden.

Die 8. Nebengruppe des Periodensystems der Elemente enthält die Elemente Fe, Ru, Os, Co, Rh, Ir, Ni, Pd und Pt. Bevorzugt werden Ir, Ni, Pd und Pt eingesetzt.

Besonders bevorzugt wird als Katalysator Platin und dessen Verbindungen eingesetzt. Es können Platin-Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern wie Siliciumdioxid, Aluminiumoxid oder Aktivkohle befinden kann, Verbindungen oder Komplexe von Platin, wie Platinhalogenide, z.B. PtCl₄, H₂PtCl₆·6H₂O,

Na₂PtCl₄·4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆·6H₂O und Cyclohexanon, Platin-Cyclopropan-Komplex der Formel (PtCl₂C₃H₆)₂, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß EP 110370 B1.
Insbesondere bevorzugt sind Karstedt-Katalysator (Platin(0)-1,3-divinyl-1,1,3,3-tetramethyldisiloxan-Komplex) und Platin(IV)-Dodecen-Chlorid-Komplex in Dodecen.

Auf 1 Mol Allylcyanid werden vorzugsweise 1 bis 10000 µmol, besonders bevorzugt 10 bis 1000 µmol, insbesondere 30 bis 150 µmol an Metall der 8. Nebengruppe des Periodensystems der Elemente eingesetzt.

Es werden vorzugsweise pro Mol Allylcyanid 1,01 Mol bis 2 Mol Dialkylchlorsilan, besonders bevorzugt 1,05 Mol bis 1,5 Mol Dialkylchlorsilan, insbesondere 1,1 Mol bis 1,3 Mol Dialkylchlorsilan eingesetzt, jeweils bezogen auf die Gesamtmenge des umzusetzenden Allylcyanids.

Es können bei der Umsetzung oder bei der Aufarbeitung weitere Komponenten, beispielsweise Lösungsmittel, eingesetzt werden. Bevorzugt werden keine weiteren Komponenten eingesetzt. Falls diese doch eingesetzt werden, dann in Mengen von höchstens 200 %, bevorzugt höchstens 100 % bezogen auf die Gesamtreaktionsmasse eingesetzt. Beispiele für solche Lösungsmittel sind aprotische Lösungsmittel, vorzugsweise lineare oder cyclische, gesättigte oder ungesättigte Kohlenwasserstoffe, z.B. Pentan, Cyclohexan, Toluol, Ether wie Methyl-tert-butylether, Anisol, Tetrahydrofuran oder Dioxan, Halogenkohlenwasserstoffe, wie Dichlormethan, 1,2-Dichlorethan oder Chlorbenzol, Nitrile wie Acetonitril oder Propionitril, oder DMSO.

Die Umsetzung wird bevorzugt bei Temperaturen von 0 bis 180°C, besonders bevorzugt von 50 bis 150°C, insbesondere von 60 bis 120°C, und Drücken bevorzugt von 800 mbar bis 16 bar, besonders bevorzugt von 1 bis 10 bar durchgeführt und insbesondere bei Drücken von 2 bis 8 bar.
Die Reaktionszeiten bei diskontinuierlicher Reaktion beziehungsweise die Verweilzeiten der Komponenten bei kontinuierlicher Reaktion betragen bevorzugt 1 min bis 8 Stunden, besonders bevorzugt 5 min bis 4 Stunden.

Alle vorstehenden Symbole der vorstehenden Formeln weisen ihre Bedeutungen jeweils unabhängig voneinander auf. In allen Formeln ist das Siliciumatom vierwertig. Die Summe aller Bestandteile der Reaktionsmischung ergeben 100 Gew.-%.

In den folgenden Beispielen sind, falls jeweils nicht anders angegeben, alle Mengen- und Prozentangaben auf das Gewicht bezogen.

### Beispiele zur Herstellung von 4-(Chlorodimethylsilyl)-butyronitril

### Vergleichsbeispiel 1 (nicht erfindungsgemäß): Vorlage Allylcyanid, offenes Gefäß

### Einwaagen:

9,9 g Allylcyanid (enthaltend 1,5 % Crotonitril) = 147,6 mmol 15,4 g Dimethylchlorsilan = 162,3 mmol (1,1 eq)
0,087 g (100 µl) Karstedt-Katalysatorlösung (Platin(0)-1,3-divinyl-1,1,3,3-tetramethyldisiloxan-Komplex 2,1-2,4 Gew.-%ige Lösung in Xylol)

### Durchführung:

Das Allylcyanid wurde unter Schutzgasatmosphäre in einem mit Rückflusskühler ausgestatteten 100ml-Dreihalskolben vorgelegt, der Karstedt-Katalysator zugegeben und auf 115°C erhitzt.

Dimethylchlorsilan wurde unter Rühren langsam über einen Zeitraum von 6 Stunden bei 115°C zugetropft. Dabei wurde beobachtet, dass unter fortschreitender Zugabe des Dimethylchlorsilans die Reaktionstemperatur kontinuierlich bis auf 52°C (Siedepunkt des Dimethylchlorsilans) abnahm, da ab einem gewissen Punkt aufgrund der Katalysator-Deaktivierung keine Umsetzung mehr erfolgte. Das erhaltene gelblich bis braun gefärbte Produkt wurde mittels 1H NMR Spektroskopie (Bruker Avance 500, Lösungsmittel: C6D6) charakterisiert. Der Umsatz bezogen auf Allylcyanid betrug 11 %.

### Beispiel 2-5: Hydrosilylierung in Abh. des Crotonitril-Gehalts

### Durchführung:

In einem Laborautoklaven (Hersteller: Berghof; Modell: BR-100) ausgestattet mit einer Dosierpumpe (Hersteller: LEWA; Modell: Mikrodosierpumpe MAH) wurde Dimethylchlorsilan (0,54 mol) vorgelegt und mit einem Platin-Dodecen-Chlorid-Katalysator (Umsetzungsprodukt von Platin(IV)-Chlorid mit Dodecen, 4,1 Gew.-% Pt in Dodecen), 35 µmol, 78 ppm bezogen auf Allylnitril, versetzt. Die Mischung wurde auf 80°C erhitzt, wobei sich ein Überdruck von 4 bar einstellte. Anschließend wurde über einen Zeitraum von 30 Minuten die Mischung enthaltend Allylcyanid (0,45 mol) zudosiert, wobei sowohl Temperatur als auch Druck anstiegen. Nach Ende der Dosierung wurde der Ansatz noch 60 Minuten bei 100°C nachgerührt und dann abgekühlt. Der Autoklav wurde entspannt, geöffnet und das erhaltene Produkt mittels 1H NMR Spektroskopie (Bruker Avance 500, Lösungsmittel: CDCl3) charakterisiert. Der jeweilige Gehalt an Crotonitril sowie die maximal erreichten Überdrücke und Temperaturen sowie die erhaltenen Ausbeuten und die Zusammensetzung des Produktes sind in Tabelle 1 wiedergegeben.

**Tabelle 1: Hydrosilylierung in Abh. des Crotonitril-Gehalts.**

| | **Crotonitril** | **pmax** | **Tmax** | **Umsatz** | **Produkt** | **Isomer** |
|---|---|---|---|---|---|---|
| **Bsp 2** | 0,01 % | 6,4 bar | 115 °C | quant. | 97,8 % | 2,2 % |
| **Bsp 3** | 1,5 % | 4,7 bar | 126 °C | 99,9 % | 97,8 % | 2,1 % |
| **Bsp 4** | 2,2 % | 6 bar | 121 °C | 91,5 % | 89,6 % | 1,9 % |
| **Bsp 5** | 3,5 % | 5,8 bar | 125°C | 88,9 % | 86,9 % | 2,0 % |

| | | | | | | |
|---|---|---|---|---|---|---|
| Produkt: 4-(Chlorodimethylsilyl)-butyronitril Isomer: 3-(Chlorodimethylsilyl)-butyronitril | | | | | | |

### Beispiel 6: Kontrolle der Wärmetönung durch Dosierung

In einem Laborautoklaven (siehe Bsp 2-5) wurden Dimethylchlorsilan (0,54 mol) und der Platin-Dodecen-Chlorid-Katalysator (Umsetzungsprodukt von Platin(IV)-Chlorid mit Dodecen, 4,1 Gew.% in Dodecen), 35 µmol, 78 ppm bezogen auf Allylcyanid, vorgelegt, der Autoklav verschlossen und auf 80°C erhitzt, wobei sich ein Überdruck von 4 bar einstellte. Anschließend wurde über 50 Minuten Allylcyanid enthaltend 1,5 % Crotonitril (analog Bsp 3) zudosiert, wobei durch die Dosierungsgeschwindigkeit eingestellt wurde, dass die Temperatur 100°C nicht überstieg und konstant gehalten wurde. Der maximale Überdruck lag bei 5,6 bar. Nach dem Ende der Dosierung wurde der Ansatz noch für 1 h bei 100°C nachreagiert und anschließend abgekühlt. Der Autoklav wurde entspannt, geöffnet und das erhaltene Produkt charakterisiert. Es wurde quantitativer Umsatz erhalten, Allylcyanid konnte mittels NMR-Spektroskopie (Bruker Avance 500, Lösungsmittel: CDCl3) nicht mehr nachgewiesen werden. Es wurden 97,8 % 4-(Chlorodimethylsilyl)-butyronitril sowie 2,2 % des isomeren Produkts 3-(Chlorodimethylsilyl)-butyronitril erhalten.

## Patentansprüche

1. Verfahren zur Herstellung von 4-(Dialkylchlorosilyl)-butyronitrilen durch Umsetzung einer Mischung aus Allylcyanid T, welches technische Reinheit aufweist und eine Mischung aus 100 Gewichtsteilen Allylcyanid und 0,01 bis 5 Gewichtsteilen Crotonitril ist, mit Dialkylchlorsilanen in Gegenwart eines Katalysators der 8. Nebengruppe des Periodensystems der Elemente, wobei die Umsetzung so geführt wird, dass in Anwesenheit des Katalysators im Reaktionsgemisch ein stöchiometrischer Überschuss des eingesetzten Dialkylchlorsilans vorliegt und das Allylcyanid T zudosiert wird, und wobei die Alkylreste im Dialkylchlorsilan und 3-Cyanopropyldialkylchlorsilan lineare Alkylreste mit 1 bis 6 Kohlenstoffatomen sind.

2. Verfahren nach Anspruch 1, bei dem das Verfahren diskontinuierlich durchgeführt wird und das Dialkylchlorsilan vorgelegt wird.

3. Verfahren nach Anspruch 1, bei dem das Verfahren kontinuierlich durchgeführt wird und alle Komponenten parallel dosiert werden, wobei das Dialkylchlorsilan stets im Überschuss vorliegt.

4. Verfahren nach einem oder mehreren der vorangehenden Ansprüche, bei dem als Dialkylchlorsilan Dimethylchlorsilan eingesetzt wird.

5. Verfahren nach einem oder mehreren der vorangehenden Ansprüche, bei der Katalysator aus Platin und dessen Verbindungen ausgewählt wird.

6. Verfahren nach einem oder mehreren der vorangehenden Ansprüche, bei dem auf 1 Mol Allylcyanid 1 bis 10000 µmol an Metall der 8. Nebengruppe des Periodensystems der Elemente eingesetzt werden.

## Claims

1. A method for preparing 4-(dialkylchlorosilyl)butyronitriles by reacting a mixture of allyl cyanide T, which has a technical grade purity and is a mixture of 100 parts by weight allyl cyanide and 0.01 to 5 parts by weight crotonitrile, with dialkylchlorosilanes in the presence of a catalyst of transition group 8 of the Periodic Table of the Elements, wherein the reaction is conducted such that in the presence of the catalyst in the reaction mixture a stoichiometric excess of the dialkylchlorosilane used is present and the allyl cyanide T is metered in and wherein the alkyl radicals in the dialkylchlorosilane and 3-cyanopropyldialkylchlorosilane are linear alkyl radicals having 1 to 6 carbon atoms.

2. Method according to Claim 1, in which the method is carried out discontinuously and the dialkylchlorosilane is initially charged.

3. Method according to Claim 1, in which the method is carried out continuously and all components are added in parallel, wherein the dialkylchlorosilane is always present in excess.

4. Method according to one or more of the preceding claims, in which the dialkylchlorosilane used is dimethylchlorosilane.

5. Method according to one or more of the preceding claims, in which the catalyst is selected from platinum and compounds thereof.

6. Method according to one or more of the preceding claims, in which, for 1 mol of allyl cyanide, 1 to 10 000 µmol of metal of transition group 8 of the Periodic Table of the Elements are used.

## Revendications

1. Procédé de fabrication de 4-(dialkylchlorosilyl)-butyronitriles par mise en réaction d'un mélange de cyanure d'allyle T, qui présente une pureté technique et qui est un mélange de 100 parties en poids de cyanure d'allyle et de 0,01 à 5 parties en poids de crotonitrile, avec des dialkylchlorosilanes en présence d'un catalyseur du 8^{e} groupe de transition du tableau périodique des éléments, la réaction étant réalisée de telle sorte qu'un excès stoechiométrique du dialkylchlorosilane utilisé soit présent dans le mélange réactionnel en présence du catalyseur, et le cyanure d'allyle T étant ajouté, et les radicaux alkyle dans le dialkylchlorosilane et le 3-cyanopropyldialkylchlorosilane étant des radicaux alkyle linéaires de 1 à 6 atomes de carbone.

2. Procédé selon la revendication 1, dans lequel le procédé est réalisé de manière discontinue et le dialkylchlorosilane est chargé initialement.

3. Procédé selon la revendication 1, dans lequel le procédé est réalisé de manière continue, et tous les composants sont ajoutés en parallèle, le dialkylchlorosilane étant toujours présent en excès.

4. Procédé selon une ou plusieurs des revendications précédentes, dans lequel du diméthylchlorosilane est utilisé en tant que dialkylchlorosilane.

5. Procédé selon une ou plusieurs des revendications précédentes, dans lequel un catalyseur à base de platine et ses composés est choisi.

6. Procédé selon une ou plusieurs des revendications précédentes, dans lequel 1 à 10 000 µmoles de métal du 8^{e} groupe de transition du tableau périodique des éléments sont utilisées pour 1 mole de cyanure d'allyle.
